# EUROPÄISCHE PATENTANMELDUNG

(11) **EP 3 308 989 A1**
(43) Veröffentlichungstag der Anmeldung: **18.04.2018**
(21) Anmeldenummer: 17196606.2
(22) Anmeldetag: 16.10.2017
(51) Int. Cl.: B60G 17/056

(54) **FEDERUNGSSYSTEM FÜR EINE FAHRZEUGACHSE**

(30) Priorität: 17.10.2016 DE 102016119714
(71) Anmelder: Weber-Hydraulik GmbH, 74363 Güglingen (DE); Deere & Company, Moline, IL 61265 (US)
(72) Erfinder: VON HOLST, Christian A., 67310 Hettenleidelheim (DE); KREMB, Michael, 67806 Rockenhausen (DE); HEGLER, Tobias, 67454 Haßloch (DE); ZATRIEB, Dr.-Ing. Jacek, 74363 Güglingen (DE)
(74) Vertreter: Lemcke, Brommer & Partner Patentanwälte Partnerschaft mbB

(57) **Zusammenfassung**

Ein Federungssystem für eine Fahrzeugachse besitzt mindestens einen hydraulischen Federungszylinder (10), der mindestens einen Arbeitsraum (11) aufweist, wobei der Arbeitsraum (11) mit einem hydraulischen Druckspeicher (20) verbunden und über Schaltmittel (35) wahlweise mit einer Druckquelle (70) und einer Drucksenke (75) verbindbar ist. Zwischen dem Arbeitsraum (11) und dem Druckspeicher (20) ist ein Absperrventil (40) angeordnet, mit dem die Federung gesperrt werden kann. Um beim Entsperren eine plötzliche Ausgleichsbewegung der Achsfederung zu vermeiden, umfasst das Federungssystem mindestens eine an den Arbeitsraum (11) des Federungszylinders (10) und den Druckspeicher (20) angeschlossene Erfassungseinrichtung (50), welche zur Erfassung eines Differenzdrucks zwischen Arbeitsraum (11) und Druckspeicher (20) ausgebildet ist. Auf diese Weise kann eine Druckdifferenz beiderseits des Absperrventils (40), also zwischen Arbeitsraum (11) des Federungszylinders (10) und Druckspeicher (20), zuverlässig erkannt und während oder vor dem Öffnen des Absperrventils (40) zum Entsperren der Federung gezielt ausgeglichen werden.

## Beschreibung

Die vorliegende Erfindung betrifft ein Federungssystem für eine Fahrzeugachse, mit mindestens einem hydraulischen Federungszylinder, der mindestens einen Arbeitsraum aufweist, wobei der Arbeitsraum mit einem hydraulischen Druckspeicher verbunden und über Schaltmittel wahlweise mit einer Druckquelle und einer Drucksenke verbindbar ist, wobei zwischen dem Arbeitsraum und dem Druckspeicher ein Absperrventil angeordnet ist und wobei das Federungssystem eine Erfassungseinrichtung zur Erfassung eines Differenzdrucks zwischen Arbeitsraum und Druckspeicher aufweist.

Hydraulische bzw. hydropneumatische Achsfederungssysteme werden seit längerem im Fahrzeugbau für Personenkraftfahrzeuge eingesetzt, kommen daneben jedoch auch zunehmend bei landwirtschaftlichen Maschinen, insbesondere bei modernen Traktoren mit einer Vorderachsfederung, zum Einsatz. Aufgrund der in unterschiedlichen Arbeitssituationen solcher landwirtschaftlicher Maschinen stark schwankenden Achsbelastungen ist eine solche Vorderachsfederung mit einer Niveauregulierung und Anpassung der Federdämpfung ausgestattet. Darüber hinaus muss in bestimmten Arbeitssituationen, beispielsweise beim Anheben schwerer Lasten mittels Frontlader, eine Sperrung der Vorderachsfederung möglich sein.

Aus der Schrift EP 2730438 A1 ist beispielsweise eine Federungseinrichtung für eine beweglich gelagerte Fahrzeugachse mit mindestens einem zwischen der Fahrzeugachse und einer tragenden Fahrzeugstruktur anbringbaren hydraulischen Federzylinder beschrieben, der zwei Arbeitskammern aufweist, die mit jeweils verschiedenen hydraulischen Druckspeichern verbunden sind.

Eine Sperrung einer solchen Federungseinrichtung kann dadurch erfolgen, dass zwischen Arbeitsraum und hydraulischem Druckspeicher ein Absperrventil angeordnet wird. Wird die hydraulische Verbindung zwischen Arbeitsraum und Druckspeicher unterbunden, so ist eine Federbewegung des Hydraulikzylinders aufgrund der Inkompressibilität des verwendeten Hydraulikmittels gesperrt.

Ein mit der Sperrung der Federung verbundener Nachteil besteht darin, dass beim Entsperren, also beim Öffnen eines entsprechenden Absperrventils zwischen Arbeitsraum des Hydraulikzylinders und Druckspeicher, eine Ausgleichsbewegung der Federung je nach momentan auf der Vorderachse ruhender Auflast stattfindet, die nur unzureichend durch eine automatische Niveauregulierung ausgeglichen werden kann.

Aus der DE 32 26452 C2 ist ein hydro-pneumatisches Federungssystem für Radlader bekannt, bei dem über ein Absperrventil die Druckräume des Federungszylinders zum Blockieren der Federung von dem über eine Verbindungsleitung angeschlossenen Hydrospeicher getrennt werden können. In der Verbindungsleitung ist zwischen dem Hydrospeicher und dem Federungszylinder ein Umschaltventil eingebaut, welches den Hydrospeicher wahlweise mit der Verbindungsleitung oder mit einem Druckausgleichsventil verbindet. Um das Fahrzeug bei blockierter Federung wieder in einen Zustand mit Federung zu überführen, wird der Hydrospeicher über das Umschaltventil mit dem Druckausgleichsventil verbunden und das Absperrventil zum Federungszylinder geöffnet. Nun ermittelt ein an die Verbindungsleitung und den Hydrospeicher angeschlossener Differenzdruckschalter eine etwaige Druckdifferenz zwischen Hydrospeicher und Hydraulikzylinder und öffnet das Druckausgleichsventil solange, bis der Druck im Hydrospeicher dem im Federungszylinder angeglichen ist. Anschließend wird der Hydrospeicher über das Umschaltventil mit dem Federungszylinder verbunden. Nachteilig ist hierbei einerseits die Komplexität der hydraulischen Schaltung und die nacheinander erfolgende Ansteuerung mehrerer Ventile, die das Federungssystem störungsanfällig macht. Außerdem muss das Absperrventil bei bestehender Druckdifferenz geöffnet werden, was aufgrund der gewissen (wenn auch geringen) Kompressibilität der Hydraulikflüssigkeit im Federungszylinder und den Zuleitungen bereits zu einer Ausgleichsbewegung führen kann.

Es ist daher eine Aufgabe der vorliegenden Erfindung, ein einfacheres Federungssystem für eine Fahrzeugachse anzugeben, bei dem Ausgleichsbewegungen der Achsfederung beim Entsperren vermieden werden können.

Die Aufgabe wird gelöst durch die Merkmale des Anspruchs 1, vorteilhafte Ausgestaltungen sind in den abhängigen Ansprüchen zu entnehmen.

Bei einem Federungssystem der eingangs genannten Art wird die Aufgabe erfindungsgemäß dadurch gelöst, dass die Erfassungseinrichtung in Parallelschaltung zu dem Absperrventil ständig mit dem Arbeitsraum des Federungszylinders und dem Druckspeicher verbunden ist, um einen Differenzdruck zwischen Arbeitsraum und Druckspeicher zu erfassen und die Schaltmittel anzusteuern, vor Öffnen des Absperrventils den Druck im Druckspeicher an den im Arbeitsraum anzugleichen.

Dadurch, dass die Erfassungseinrichtung in Parallelschaltung zu dem Absperrventil ständig mit dem Arbeitsraum des Federungszylinders und dem Druckspeicher verbunden ist, kann eine Druckdifferenz beiderseits des Absperrventils, also zwischen Arbeitsraum des Federungszylinders und Druckspeicher, auch bei geschlossenem Absperrventil zuverlässig erkannt und vor dem Öffnen des Absperrventils gezielt ausgeglichen werden. Der Ausgleich einer Druckdifferenz kann dabei nur einmalig kurz vor dem Öffnen des Absperrventils erfolgen. Gleichermaßen ist es aber auch möglich, auftretende Druckdifferenzen ständig auszugleichen, also den Druck im Druckspeicher ständig den wechselnden Belastungen am Federungszylinder anzugleichen. Durch letztgenannte Maßnahme wird erreicht, dass das Absperrventil jederzeit geöffnet werden kann, zumindest jedoch wesentlich schneller, als wenn zuvor erst ein Druckausgleich durchgeführt werden muss.

Zweckmäßigerweise ist das Federungssystem mit einem Steuergerät ausgerüstet, welches zum Öffnen des Absperrventils die Schaltmittel in Abhängigkeit eines von der Erfassungseinrichtung gelieferten Differenzdrucksignals ansteuert, um den Druck im Druckspeicher an den im Arbeitsraum anzugleichen und erst nach erfolgter Angleichung das Absperrventil öffnet. Erfindungsgemäß kann nämlich dadurch, dass der Druckspeicher je nach Richtung der Druckdifferenz mit einer Druckquelle oder einer Drucksenke verbunden wird, eine von der Erfassungseinrichtung detektierte Druckdifferenz ausgeglichen werden, bevor die Federung durch Öffnen des Absperrventils entsperrt wird. Hierdurch wird eine Ausgleichsbewegung der gefederten Achse vermieden.

Die Erfassungseinrichtung kann bei einer bevorzugten Ausführungsform der Erfindung mittels zweier Druckräume und einem dazwischen angeordneten verschiebbaren Glied, beispielsweise einem in einer beiderseits mit Druckanschlüssen versehenen Bohrung beweglichen angeordneten Kolben, ausgebildet werden, wobei die beiden Druckräume einerseits mit dem Druck im Arbeitsraum des Zylinders, andererseits mit dem Druck im Druckspeicher verschiebewirksam beaufschlagt werden. Je nachdem, auf welcher Seite des Absperrventils ein höherer Druck herrscht, wird das verschiebbare Glied in die eine oder andere Richtung verschoben und dient somit als Indikator dafür, ob der Druck im Druckspeicher erhöht oder vermindert werden muss, um einen bestehenden Differenzdruck zu kompensieren.

Insbesondere ist hierbei vorgesehen, dass die mindestens zwei Druckräume innerhalb der Erfassungseinrichtung von dem verschiebbaren Glied leckfrei voneinander getrennt sind. Somit wird vermieden, dass über die Erfassungseinrichtung Hydraulikmittel an dem Absperrventil vorbeifließen und somit im Falle eines bestehenden Differenzdrucks sich der Federweg der gefederten Achse im gesperrten Zustand ändern, also die Vorderachse absinken oder angehoben werden kann.

Bei einer alternativen Ausführungsform weist die Erfassungseinrichtung mindestens einen weiteren Druckraum auf, der mit der Drucksenke, beispielsweise einem Hydraulikmitteltank, verbunden ist. Der weitere Druckraum kann dazu dienen, ein zur Auslenkung und damit zur Höhe der Druckdifferenz proportionales Signal mittels eines dem weiteren Druckraum zugeordneten Sensors zu erfassen. Die Entlastung des weiteren Druckraums zum Tank hin hat die Funktion, im Falle geringfügiger Leckverluste an den Dichtungen zwischen dem weiteren Druckraum und dem ersten bzw. zweiten Druckraum anfallendes Hydraulikmittel in den Tank abzuführen. Außerdem braucht der Sensor, der an den weiteren Druckraum angeschlossen wird, nicht druckbeständig ausgeführt zu sein, was den Einsatz kostengünstigerer Sensoren ermöglicht.

Es liegt somit sowohl im Rahmen der vorliegenden Erfindung, dass die Erfassungseinrichtung ein binäres Differenzdrucksignal generiert, welches lediglich die Richtung einer bestehenden Druckdifferenz anzeigt, als auch ein stetiges Differenzdrucksignal, welches von der Höhe einer herrschenden Druckdifferenz abhängig ist.

Zweckmäßigerweise weist die Erfassungseinrichtung bei der zuvor beschriebenen Ausführungsform außerdem einen Sensor auf, der die Lage des beweglichen Gliedes erfasst. Das von diesem Sensor erzeugte Differenzdrucksignal kann dem entsprechenden Steuergerät zugeführt und so zu einer automatischen Angleichung des Differenzdrucks vor Öffnen des Absperrventils genutzt werden. Als Sensor kann vorzugsweise ein beispielsweise induktiver oder kapazitiver Näherungssensor oder auch ein Reed-Kontakt dienen.

Darüber hinaus ist es vorteilhaft, wenn die Erfassungseinrichtung mindestens eine Feder aufweist, die sich auf das bewegliche Glied stützt. Mittels einer solchen Feder, vorzugsweise mittels zwei beidseitig des beweglichen Glieds angeordneten Federn, erfolgt in einem differenzdruckfreien bzw. druckausgeglichenen Zustand eine Rückführung des beweglichen Glieds in eine Solllage, beispielsweise eine Mittelstellung. Außerdem übt eine solche Feder eine dem Differenzdruck entgegen gerichtete und zur Auslenkung proportionale Rückstellkraft auf das bewegliche Glied aus, sodass durch Messung dessen Auslenkung die Höhe der Druckdifferenz ermittelt werden kann.

Bei einer bevorzugten Ausführungsform ist der hydraulische Speicher zwischen dem Absperrventil und den Schaltmitteln angeordnet, welche den Druckspeicher wahlweise mit der Druckquelle oder der Drucksenke verbinden. Über die Schaltmittel kann somit bei geschlossenem Absperrventil ein Ausgleich eines etwaigen Differenzdrucks erfolgen. Werden die Schaltmittel geschlossen, das heißt eine hydraulische Verbindung zwischen Druckspeicher und Druckquelle bzw. Drucksenke unterbrochen, so bleibt die über die Druckbeaufschlagung des Druckspeichers aktuell eingestellte Federungsstärke des Federungssystems konstant.

Darüber hinaus wird im Rahmen der vorliegenden Erfindung ein Hydraulikblock für ein Federungssystem der vorstehend genannten Art beschrieben, welcher ein hydraulisches Absperrventil mit einem ersten und einem zweiten Hydraulikanschluss und eine in Parallelschaltung zu dem Absperrventil ständig mit dem ersten und dem zweiten Hydraulikanschluss verbundene Erfassungseinrichtung zur ständigen Erfassung eines Differenzdrucks zwischen erstem und zweitem Hydraulikanschluss aufweist. Ein solcher Hydraulikblock bildet eine robuste und wartungsarme Baueinheit für ein Federungssystem der vorstehend beschriebenen Art und kann zwischen Federungszylinder und hydraulischem Druckspeicher verbaut werden.

Außerdem wird im Rahmen der vorliegenden Erfindung ein Verfahren zum Sperren und Entsperren einer hydropneumatischen Federung eines Fahrzeugs angegeben, wobei die Federung mindestens einen hydraulischen Federungszylinder mit mindestens einem Arbeitsraum aufweist, und bei der der Arbeitsraum mit einem hydraulischen Druckspeicher verbunden und über Schaltmittel wahlweise mit einer Druckquelle und einer Drucksenke verbindbar ist. Das genannte Verfahren zeichnet sich erfindungsgemäß dadurch aus, dass zum Sperren der Federung ein zwischen dem Arbeitsraum und dem Druckspeicher angeordnetes Absperrventil geschlossen wird, dass bei geschlossenem Absperrventil über eine in Parallelschaltung zu dem Absperrventil ständig mit dem Arbeitsraum des Federungszylinders und dem Druckspeicher verbundene Erfassungseinrichtung ein Differenzdruck zwischen Arbeitsraum und dem Druckspeicher ermittelt wird, die Schaltmittel in Abhängigkeit des ermittelten Differenzdrucks angesteuert werden, um den Druck im Druckspeicher an den im Arbeitsraum anzugleichen, und dass zum Entsperren der Federung das Absperrventil (nur) nach erfolgter Angleichung geöffnet wird.

Während ein Signal zum Sperren des Federungssystems direkt ein Absperren des Absperrventils bewirkt, löst ein Signal zum Entsperren des Federungssystems erfindungsgemäß einen verketten Prozess aus, beginnend mit dem Angleichen des Druckes des hydraulischen Druckspeichers an den Druck im Arbeitsraum des Federungszylinders mit Hilfe einer Druckversorgungseinrichtung.

Auf diese Weise wird eine plötzliche Ausgleichsbewegung der Achsfederung beim Entsperren des Federungssystems vermieden.

Vorzugsweise erfolgt das Angleichen der Drücke derart, dass der Druckspeicher durch Umschalten der Schaltmittel über eine Betätigungseinrichtung mit der Druckquelle oder mit der Drucksenke verbunden wird, und über die Druckquelle bzw. die Drucksenke der Differenzdruck abgebaut wird.

Mittels einer Erfassungseinrichtung, die zwei Druckräume und ein dazwischen angeordnetes verschiebbares Glied aufweist, wobei die beiden Druckräume einerseits mit dem Druck im Arbeitsraum des Zylinders, anderseits mit dem Druck im Druckspeicher verschiebewirksam beaufschlagt sind, kann ein Ende des Angleichens der Drücke auf besonders einfache Weise als Lagewechsel des verschiebbaren Gliedes der Erfassungseinrichtung durch einen Sensor erkannt werden.

Weitere Vorteile und Eigenschaften der vorliegenden Erfindung ergeben sich aus der nachfolgenden Beschreibung von Ausführungsbeispielen anhand der Zeichnungen. Es zeigen:
- Figur 1: ein hydraulisches Schaltschema einer hydropneumatischen Fahrzeugfederung mit Absperrventil und erfindungsgemäßer Erfassungseinrichtung in einem ersten Ausführungsbeispiel,
- Figur 2: ein zweites Ausführungsbeispiel einer erfindungsgemäßen Federungseinrichtung mit alternativer Erfassungseinrichtung und
- Figur 3: einen Hydraulikblock, der in einer erfindungsgemäßen Fahrzeugfederung verwendet werden kann.

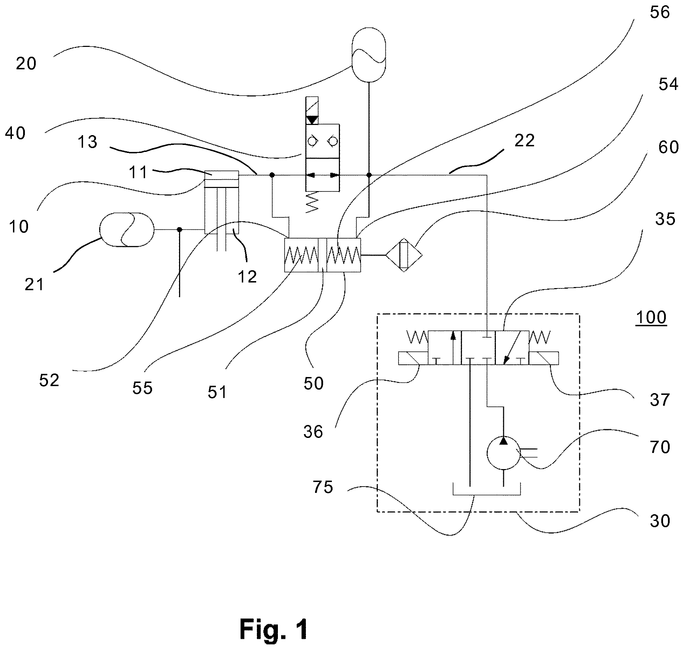

Das in Figur 1 gezeigte Federungssystem umfasst einen hydraulischen Federungszylinder 10, der zur Federung einer Fahrzeugachse zwischen dieser und einer tragenden Fahrzeugstruktur angebracht wird. Bei der gegenüber der tragenden Fahrzeugstruktur beweglich gelagerten Fahrzeugachse kann es sich beispielsweise um eine Pendelachse, insbesondere um eine gefederte Vorderachse eines landwirtschaftlichen Traktors handeln. Hierbei kann insbesondere vorgesehen sein, dass jeder der beiden Seiten der Pendelachse ein separater hydraulischer Federungszylinder 10 zugeordnet ist, sodass bei einer Bewegung der Pendelachse die hydraulischen Federungszylinder gegensinnig ein- bzw. ausgelenkt werden. An dieser Stelle sei angemerkt, dass das erfindungsgemäße Federungssystem nicht auf die Verwendung bei einer Pendelachse beschränkt ist. Vielmehr kann es auch im Zusammenhang mit einer Einzelradaufhängung oder anderen Achsgeometrien genutzt werden.

Der in Figur 1 beispielhaft gezeigte Federungszylinder 10 weist einen oberen Arbeitsraum 11 und einen unteren Arbeitsraum 12 auf, die über einen längsbeweglichen Kolben fluiddicht getrennt sind. Eine von dem Kolben getragene Kolbenstange ragt durch den unteren Arbeitsraum 12 aus dem Federungszylinder 10 heraus und kann unter Verschiebung des Kolbens in den Federungszylinder 10 eingefahren bzw. aus diesem ausgeschoben werden. Der untere Arbeitsraum 12 ist dementsprechend als Ringraum ausgebildet und gegenüber der Kolbenstange in herkömmlicher Weise an seinem unteren Zylinderkopf mittels einer Kolbenstangendichtung gedichtet.

Der im Rahmen der vorliegenden Erfindung vor allem interessierende Arbeitsraum 11 des Hydraulikzylinders ist über eine Hydraulikleitung 13 und ein Absperrventil 40 mit einem hydraulischen Druckspeicher, beispielsweise einem stickstoffgefüllten Hydromembranspeicher 20, verbunden. Federt die Kolbenstange in den Federungszylinder 10 ein, so wird Hydraulikflüssigkeit aus dem Arbeitsraum 11 verdrängt und fließt unter Kompression des darin enthaltenen gasförmigen Mediums in den Druckspeicher 20. Der Federungszylinder 10 bildet somit zusammen mit dem hydraulischen Druckspeicher 20 eine Gasdruckfeder, mit der die vorgenannte Fahrzeugachse gefedert wird.

Zusätzlich kann auch der untere Arbeitsraum 12 mit einem weiteren hydraulischen Druckspeicher 21 verbunden sein. Auf diese Weise kann das Federungssystem vorgespannt werden. Durch Anpassung des Drucks im oberen Arbeitsraum 11 bzw. unteren Arbeitsraum 12 lassen sich das Niveau der tragenden Fahrzeugstruktur gegenüber dem Erdboden und die Federhärte der Federungseinrichtung gezielt beeinflussen und dynamisch an die Betriebssituation anpassen.

Wesentlich im Rahmen der vorliegenden Erfindung ist einerseits, dass die hydraulische Verbindung 13 zwischen Arbeitsraum 13 und hydraulischem Druckspeicher 20 über das Absperrventil 40 unterbrochen werden kann. Da das im Arbeitsraum 11 befindliche Hydraulikmittel (Hydrauliköl) inkompressibel ist, kann in diesem Fall die Kolbenstange nicht weiter in den Federungszylinder 10 einfedern; das Federungssystem ist somit deaktiviert.

Eine solche Sperrung der Vorderachsfederung bei einem landwirtschaftlichen Arbeitsgerät wie etwa einem Traktor kann in verschiedenen Arbeitssituationen sinnvoll und erforderlich sein. Beispielsweise wenn mittels eines am Traktor angebrachten Frontladers eine schwere Last angehoben werden soll, kann auf diese Weise verhindert werden, dass das Federungssystem der Vorderachse nachgibt und sich somit der Traktor frontseitig unter der angehobenen Last nach unten neigt.

Zusätzlich ist an dem hydraulischen Druckspeicher 20 über eine entsprechende Hydraulikleitung 22 eine hydraulische Versorgungseinrichtung 30 angeschlossen. Diese umfasst eine Hydraulikpumpe 70, die als Druckquelle dient, einen Hydraulikmitteltank 75, der als Drucksenke dient und ein zwischen Hydraulikleitung 22 einerseits und Hydraulikpumpe 70 und Hydraulikmitteltank 75 andererseits angeordnetes 3/3-Wegeventil 35, welches über entsprechende Betätigungsmittel 36, 37, beispielsweise Magnetspulen, geschaltet wird. Über das 3/3-Wegeventil 35 lässt sich die Hydraulikmittelleitung 22 wahlweise in der Mittelstellung des Ventils 35 von der Versorgungseinrichtung 30 abkoppeln und absperren, in der rechten Ventilstellung mit dem Hydraulikmitteltank 75 und in der linken Ventilstellung mit der Hydraulikpumpe 70 verbinden. Über die Versorgungseinrichtung 30 kann der Druck im Hydraulikspeicher 20 und damit im Arbeitsraum 11 des Federungszylinders verändert werden, um damit Niveau und Federhärte der gefederten Fahrzeugachse zu regulieren.

In gleicher Weise wie der Arbeitsraum 11 kann auch der ringförmige Arbeitsraum (Ringraum) 12 des Federungszylinders 10 über ein entsprechendes Wegeventil mit der Versorgungseinrichtung 30 oder einer eigenständigen Versorgungseinrichtung verbunden werden, um auch den Druck im Arbeitsraum 12 bzw. dem daran angeschlossenen Druckspeicher 21 und damit die Vorspannung des Federungszylinders 10 in an sich bekannter Weise verändern zu können. Eine entsprechende Hydraulikleitung zum Anschluss an eine Versorgungseinrichtung ist hier nur angedeutet.

Nach einem weiteren Aspekt der vorliegenden Erfindung ist außerdem eine Erfassungseinrichtung 50 vorgesehen, mit der eine Druckdifferenz zwischen Arbeitsraum 11 des Federungszylinders 10 und Druckspeicher 20 erfasst werden kann. Eine solche Druckdifferenz kann auftreten, wenn im geschlossenen Zustand des Absperrventils 40, also bei gesperrtem Federungssystem, sich die auf der zugehörigen Vorderachse ruhende Auflast ändert, beispielsweise durch Anbau eines Anbaugerätes, Anheben oder Absenken einer Last mit dem am Traktor angebauten Vorderlader oder Ähnlichem. Die Erfassungseinrichtung 50 weist zu diesem Zweck einen ersten Druckraum 52, der mit der Hydraulikleitung 13 verbunden ist, und einen zweiten Druckraum 54, der mit der Hydraulikleitung 22 verbunden ist, auf. Mit anderen Worten ist die Erfassungseinrichtung 50 vor und hinter dem Absperrventil 40 angeschlossen. Wesentlich ist, dass die Erfassungseinrichtung somit ständig, also insbesondere ohne Zwischenschaltung weiterer Ventile und in jedem Schaltzustand des Absperrventils 40, mit dem Arbeitsraum 11 des Federungszylinders 10 und dem Druckspeicher 20 verbunden ist.

Zwischen den beiden Druckräumen 52, 54 befindet sich ein verschiebbarer Kolben 51, der über beiderseits angeordnete Federn 55, 56 im drucklosen Zustand in einer Mittelstellung gehalten wird. Wird das Absperrventil 40 gesperrt und es tritt eine Druckdifferenz zwischen Arbeitsraum 11 und Druckspeicher 20 auf, so wird der Kolben 51 in Abhängigkeit der Druckdifferenz nach links oder rechts verschoben. Über einen an die Erfassungseinrichtung 50 angeschlossenen Sensor 60 kann die Lage des Kolbens 51 erfasst und somit die Druckdifferenz, zumindest dem Vorzeichen nach, ermittelt werden.

Der Sensor 60 kann beispielsweise ein berührungslos arbeitender Sensor sein. Grundsätzlich kann der Sensor 60 in beliebiger Weise ausgeführt werden. Besonders geeignet sind druckfeste Näherungsschalter, die induktiv oder kapazitiv arbeiten, also eine Annäherung des Kolbens 51 durch Änderung einer Induktivität oder Kapazität erkennen.

Das von dem Sensor 60 erzeugte Signal wird einem Steuergerät zugeführt, mit dem das Federungssystem betrieben wird. Das Steuergerät sorgt nun dafür, dass bevor das Absperrventil 40 geöffnet wird, ein etwa bestehender Differenzdruck zwischen Arbeitsraum 11 und hydraulischem Druckspeicher 20 über die Versorgungseinrichtung 30 zumindest annähernd ausgeglichen wird. Hierzu wird, je nachdem, ob im Druckspeicher 20 ein größerer oder kleinerer Druck als im Arbeitsraum 11 herrscht, über das Steuergerät das 3/3-Wegeventil 35 so angesteuert, dass der Druckspeicher 20 entweder mit dem Hydraulikmitteltank 75 verbunden wird, um den Druck im Hydraulikspeicher 20 zu reduzieren, oder mit der Hydraulikpumpe 70 verbunden wird, um den Druck zu erhöhen, und zwar solange, bis die Erfassungseinrichtung 50 anzeigt, dass die Druckdifferenz zwischen Hydraulikspeicher 20 und Arbeitsraum 11 zumindest innerhalb vorgegebener Grenzen ausgeglichen ist. Anschließend kann das Absperrventil 40 geöffnet werden, um das Federungssystem zu entsperren. Auf diese Weise wird vermieden, dass die Vorderachsfederung beim Entsperren eine Ausgleichsbewegung ausführt, also die tragende Fahrzeugstruktur entweder nachgibt oder von dem Federungssystem angehoben wird.

Die beiden Druckräume 52, 54 können in einfacher Weise als eine Bohrung ausgeführt werden, in die beiderseits entsprechende Hydraulikanschlüsse münden, und innerhalb der dichtend ein beweglicher Bolzen oder Kolben 51 eingesetzt ist. Der Kolben 51 kann beispielsweise mittels einer weichelastischen Dichtung in der genannten Bohrung 52, 53 gedichtet sein.

Ist der Druck im Arbeitsraum 11 höher als im Druckspeicher 20, so wird der Kolben nach rechts verschoben. Ist der Druck im Arbeitsraum 11 hingegen niedriger als im Druckspeicher 20, so wird der Kolben nach links verschoben. Der Sensor 60 braucht also lediglich auf einer Seite der Bohrung 52, 54 die Lage des Kolbens 51 zu erkennen. Je nachdem, ob der Kolben 51 links oder rechts liegt, wird vor dem Öffnen des Absperrventils 40 der Druckspeicher mit dem Hydraulikmitteltank 75 oder mit der Hydraulikpumpe 70 verbunden, und zwar so lange, bis der Kolben 51 sich in seine entgegengesetzte Stellung bewegt. In diesem Augenblick ist der Druck nämlich angeglichen und das 3/3-Wegeventil 35 wird geschlossen. Der Sensor 60 muss im einfachsten Fall also nur eine Veränderung der Lage des Kolbens 51 erkennen. Die Lage des Kolbens 51 steht dabei für das Vorzeichen der Druckdifferenz, also ein binäres Druckdifferenzsignal, dessen Kenntnis im einfachsten Fall für einen Druckanpassung ausreicht. Auf die Federn 55, 56 kann in diesem Falle verzichtet werden.

Die Erfassungseinrichtung 50 kann aber in einer Weiterbildung der Erfindung neben dem bloßen Vorzeichen einer etwaigen Druckdifferenz zwischen Arbeitsraum 11 und Druckspeicher 20 zusätzlich über die Auslenkung des Kolbens 51 die Höhe des herrschenden Differenzdruckes feststellen. Diese Information kann in dem zugehörigen Steuergerät verarbeitet werden, um beispielsweise Schaltzeiten für das 3/3-Wegeventil 35 festzulegen, innerhalb der die Druckdifferenz voraussichtlich ausgeglichen sein wird.

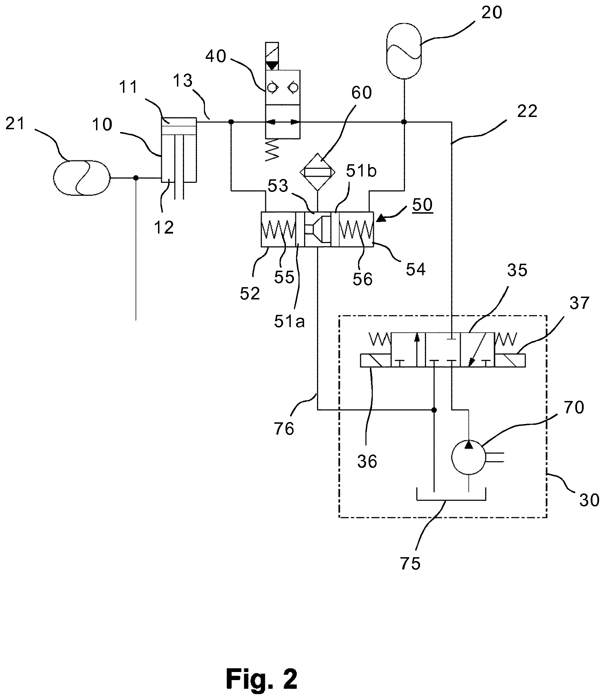

In Figur 2 ist ein zweites Ausführungsbeispiel eines erfindungsgemäßen Federungssystems schematisch gezeigt. Hierbei sind gleiche und gleichwirkende Bauteile mit gleichen Bezugszeichen wie in Figur 1 versehen. Die Erfassungseinrichtung 50 im zweiten Ausführungsbeispiel unterscheidet sich vom ersten Ausführungsbeispiel dadurch, dass zwischen dem linken Druckraum 52 und dem rechten Druckraum 54 ein dritter Druckraum 53 angeordnet ist, der über eine Hydraulikleitung 76 mit dem Hydraulikmitteltank 75 verbunden bzw. entlastet ist.

Der linke Druckraum 52 ist von dem mittleren Druckraum 53 durch einen ersten Kolben 51a getrennt. Der rechte Druckraum 54 ist entsprechend über einen zweiten Kolben 51b von dem mittleren Druckraum 53 getrennt. Zwischen den Kolben 51a, 51b ist ein starrer Abstandshalter angeordnet, der sich von links nach rechts konisch verbreitert. Im Gegensatz zu dem ersten Ausführungsbeispiel, bei dem der Sensor 60 an den rechten Druckraum 54 angeschlossen ist, ist der Sensor 60 hier an den mittleren Druckraum 53 angeschlossen. Dies hat den Vorteil, dass der Sensor 60 nicht druckfest zu sein braucht, da der Druckraum 53 zum Tank 75 hin entlastet.

Die Funktion des konischen geformten Abstandshalters zwischen den Kolben 51a, 51b besteht darin, dass über den Näherungssensor 60, der auf die Präsenz bzw. Nähe ferromagnetischen oder elektrisch leitenden Materials reagiert, ein zur Auslenkung proportionales Signal erzeugt werden kann. Die Entlastung des Druckraums 53 zum Tank 75 dient außerdem rein vorsorglich dazu, im Falle geringer Undichtigkeiten an den Kolben 51a, 51b anstehendes Hydraulikmittel in den Tank 75 abzuleiten.

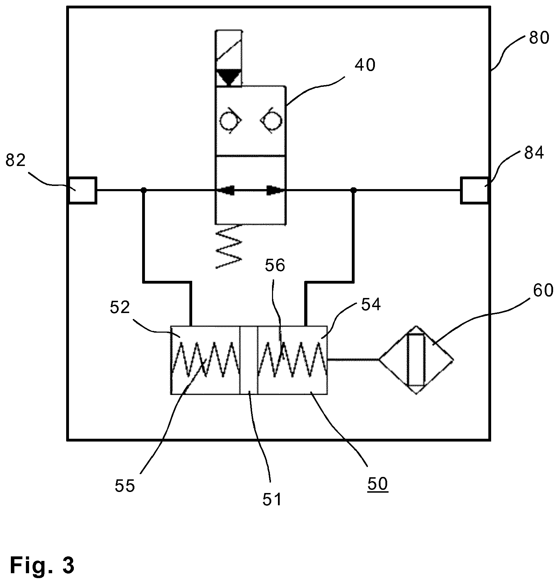

In Figur 3 ist ein Hydraulikblock 80 gezeigt, der zum Einsatz in einem hydraulischen Federungssystem vorgesehen ist. Der Hydraulikblock umfasst das Absperrventil 40 und die Erfassungseinrichtung 50 zur Erfassung eines beiderseits des gesperrten Absperrventils 40 anstehenden Differenzdrucks. Absperrventil 40 und Erfassungseinrichtung 50 sind in einer Parallelschaltung zwischen zwei Hydraulikanschlüssen 82, 84 des Hydraulikblocks 80 fluidleitend verbunden. An der rechten Druckkammer 54 ist wie in Figur 1 der Näherungssensor 60 angeschlossen, der die Lage des beweglichen Kolbens 51 innerhalb einer Bohrung, welche die Druckräume 52, 54 bildet, detektiert.

In den vorstehenden Ausführungsbeispielen wurde die Erfindung anhand nur eines Federungszylinders beschrieben. In ähnlicher Weise kann jedoch auch die Druckdifferenz an mehreren Federungszylindern und zugehörigen Druckspeichern überwacht und erkannt werden. In diesem Fall würde bei gesperrter Federung diese erst dann freigegeben, wenn an allen Federungszylindern ein Ausgleich des jeweiligen Differenzdrucks erfolgt ist.

## Patentansprüche

1. Federungssystem für eine Fahrzeugachse, mit mindestens einem hydraulischen Federungszylinder (10), der mindestens einen Arbeitsraum (11) aufweist, wobei der Arbeitsraum (11) mit einem hydraulischen Druckspeicher (20) verbunden und über Schaltmittel (35) wahlweise mit einer Druckquelle (70) und einer Drucksenke (75) verbindbar ist, wobei zwischen dem Arbeitsraum (11) und dem Druckspeicher (20) ein Absperrventil (40) angeordnet ist und wobei das Federungssystem eine Erfassungseinrichtung (50) zur Erfassung eines Differenzdrucks zwischen Arbeitsraum (11) und Druckspeicher (20) aufweist,
**dadurch gekennzeichnet, dass**
die Erfassungseinrichtung (50) in Parallelschaltung zu dem Absperrventil (40) ständig mit dem Arbeitsraum (11) des Federungszylinders (10) und dem Druckspeicher (20) verbunden ist, um einen Differenzdruck zwischen Arbeitsraum (11) und Druckspeicher (20) zu erfassen und die Schaltmittel (35) anzusteuern, vor Öffnen des Absperrventils (40) den Druck im Druckspeicher (20) an den im Arbeitsraum (11) anzugleichen.

2. Federungssystem nach Anspruch 1, mit einem Steuergerät, welches zum Öffnen des Absperrventils (40) die Schaltmittel (35) in Anhängigkeit eines von der Erfassungseinrichtung (50) gelieferten Differenzdrucksignals ansteuert, um den Druck im Druckspeicher (20) an den im Arbeitsraum (11) anzugleichen und erst nach erfolgter Angleichung das Absperrventil (40) öffnet.

3. Federungssystem nach Anspruch 1 oder 2, bei dem die Erfassungseinrichtung (50) zwei Druckräume (52, 54) und ein dazwischen angeordnetes verschiebbares Glied (51) aufweist, wobei die beiden Druckräume (52, 54) einerseits mit dem Druck im Arbeitsraum (11) des Federungszylinders (10), anderseits mit dem Druck im Druckspeicher (20) verschiebewirksam beaufschlagt sind.

4. Federungssystem nach Anspruch 3, bei dem die mindestens zwei Druckräume (52, 54) innerhalb der Erfassungseinrichtung (50) von dem verschiebbaren Glied (51) leckfrei voneinander getrennt sind.

5. Federungssystem nach Anspruch 3 oder 4, bei dem die Erfassungseinrichtung (50) mindestens einen weiteren Druckraum (53) aufweist, der mit der Drucksenke (75) verbunden ist.

6. Federungssystem nach einem der Ansprüche 3 bis 5, bei dem die Erfassungseinrichtung (50) einen vorzugsweise berührungslosen Sensor (60) aufweist, der die Lage des beweglichen Gliedes (51) erfasst.

7. Federungssystem nach einem der Ansprüche 3 bis 6, bei dem die Erfassungseinrichtung (50) mindestens eine Feder (55, 56) aufweist, die sich auf das bewegliche Glied (51) stützt.

8. Federungssystem nach einem der vorangehenden Ansprüche, bei dem der hydraulische Speicher (20) zwischen dem Absperrventil (40) und den Schaltmitteln (35) angeordnet ist.

9. Hydraulikblock (80) für ein Federungssystem nach einem der vorangehenden Ansprüche, umfassend ein hydraulisches Absperrventil (40) mit einem ersten und einem zweiten Hydraulikanschluss (82, 84) und mit einer in Parallelschaltung zu dem Absperrventil mit dem ersten und dem zweiten Hydraulikanschluss (82, 84) verbundene Erfassungseinrichtung (50) zur ständigen Erfassung eines Differenzdrucks zwischen erstem und zweitem Hydraulikanschluss (82, 84).

10. Verfahren zum Sperren und Entsperren einer hydropneumatischen Federung eines Fahrzeugs, welche mindestens einen hydraulischen Federungszylinder (10) mit mindestens einen Arbeitsraum (11) aufweist, und bei der der Arbeitsraum (11) mit einem hydraulischen Druckspeicher (20) verbunden ist, der über Schaltmittel (35) wahlweise mit einer Druckquelle (70) und einer Drucksenke (75) verbindbar ist, wobei
- zum Sperren der Federung ein zwischen dem Arbeitsraum (11) und dem Druckspeicher (20) angeordnetes Absperrventil (40) geschlossen wird und
- bei geschlossenem Absperrventil (40) über eine in Parallelschaltung zu dem Absperrventil (40) ständig mit dem Arbeitsraum (11) des Federungszylinders (10) und dem Druckspeicher (20) verbundene Erfassungseinrichtung (50) ein Differenzdruck zwischen Arbeitsraum (11) und Druckspeicher (20) ermittelt wird, die Schaltmittel (35) in Anhängigkeit des ermittelten Differenzdrucks angesteuert werden, um den Druck im Druckspeicher (20) an den im Arbeitsraum (11) anzugleichen, und
- zum Entsperren der Federung das Absperrventil (40) nach erfolgter Angleichung geöffnet wird.

11. Verfahren nach Anspruch 10, bei dem zum Angleichen der Drücke der Druckspeicher (20), durch Umschalten der Schaltmittel (35) über eine Betätigungseinrichtung (36, 37) mit der Druckquelle (70) oder mit der Drucksenke (75) verbunden wird.

12. Verfahren nach Anspruch 10 oder 11, bei dem die Erfassungseinrichtung (50) zwei Druckräume (52, 54) und ein dazwischen angeordnetes verschiebbares Glied (51) aufweist, wobei die beiden Druckräume (52, 54) einerseits mit dem Druck im Arbeitsraum (11) des Federungszylinders (10), anderseits mit dem Druck im Druckspeicher (20) verschiebewirksam beaufschlagt sind, und bei dem ein Ende des Angleichens der Drücke als Lagewechsel des verschiebbaren Gliedes (51) der Erfassungseinrichtung (50) durch einen Sensor (60) erkannt wird.
